# NEUE EUROPÄISCHE PATENTSCHRIFT

(11) **EP 0 563 066 B2**
(45) Veröffentlichungstag und Bekanntmachung des Hinweises auf die Entscheidung über den Einspruch: **29.04.1998**
(45) Hinweis auf die Patenterteilung: 07.09.1994
(21) Anmeldenummer: 91920703.5
(22) Anmeldetag: 02.12.1991
(51) Int. Cl.: G01M 15/00, F02B 77/08

(54) **DIAGNOSEEINRICHTUNG ZUR ERKENNUNG VON VERBRENNUNGSAUSSETZERN IN EINER BRENNKRAFTMASCHINE**
DIAGNOSTIC DEVICE FOR DETECTING DEFECTIVE COMBUSTION IN AN INTERNAL COMBUSTION ENGINE
DISPOSITIF DE DIAGNOSTIC POUR LA DETECTION DE RATES DE COMBUSTION DANS UN MOTEUR A COMBUSTION INTERNE

(30) Priorität: 19.12.1990 EP 90124827
(43) Veröffentlichungstag der Anmeldung: 06.10.1993
(73) Patentinhaber: SIEMENS AKTIENGESELLSCHAFT, 80333 München (DE)
(72) Erfinder: Angermaier, Anton Dipl. Ing., D-8300 Landshut (DE); Wier, Manfred Dr.-Ing., D-8411 Wenzenbach (DE)
(86) Internationale Anmeldenummer: EP9102277
(87) Internationale Veröffentlichungsnummer: WO9211522

(56) Entgegenhaltungen:
- EP-A- 386 431
- EP-A- 484 691
- US-A- 4 445 326
- Elektronik, vol. 38, no. 14, 7 July 1989, München, DE, Seiten 78-82; D. Dreyer: "KFZ-Tester mit drahtloser Messwerkaufnahme"
- Patent Abstracts of Japan, vol. 10, no. 242 (M-509)(2298), 21. August 1986 & JP-A-61072844
- Patent Abstracts of Japan, vol. 14, no. 235 (M-975)(4178), 18. Mai 1990 & JP-A-2061368

## Beschreibung

Die Erfindung betrifft eine Diagnoseeinrichtung zur Erkennung von Verbrennungsaussetzern in einer Brennkraftmaschine.

Die Forderung Aussetzer unter allen Betriebsbedingungen einer Brennkraftmaschine zu erkennen, um damit verbundenen erhöhten Schadstoffausstößen begegnen zu können oder um Katschutzfunktionen durchzuführen findet immer mehr Eingang in entsprechende Vorschriften. Zur Erkennung solcher Verbrennungsaussetzer sind schon verschiedene Verfahren bekannt geworden, wie z. B. Auswertung eines Laufunruheoder Lambda-Sonden-Signals oder eine Überwachung des Zündstroms etc. z.B. siehe JP-A-2061368 und PATENT ABSTRACTS OF JAPAN, vol. 14, no. 235 (M-975) (4178) (18.5.1990)

Es hat sich jedoch herausgestellt, daß keines dieser Verfahren eine allgemeingültige Aussage über Verbrennungsaussetzer zu liefern vermag. Es besteht einerseits das Problem, daß ein Verfahren nicht in allen Last- und Drehzahlbereichen ausreichend genau arbeitet, wie z. B. die Laufunruhe-Betrachtung. Andererseits besteht bei einigen anderen Verfahren das Problem, daß keine sichere Aussage über eine ordnungsgemäße Verbrennung möglich ist, da nur für den Verbrennungsprozeß notwendige Teilfunktionen diagnostiziert werden, wie z. B. bei der Zündstromdiagnose.

Die Aufgabe der vorliegenden Erfindung besteht demgegenüber darin, eine Diagnoseeinrichtung zur Erkennung von Verbrennungsaussetzern so auszuführen, daß eine Aussage über eine ordnungsgemäße Verbrennung in allen Last- und Drehzahlbereichen der Erennkraftmaschine sicherer möglich ist.

Die erfindungsgemäße Lösung ist im Anspruch 1 gekennzeichnet. Vorteilhafte Weiterbildungen der Erfindung finden sich in den Unteransprüchen. Die erfindungsgemäße Lösung geht von der Überlegung aus, daß Diagnoseverfahren zur Detektion von Verbrennungsaussetzern in drei Gruppen einteilbar sind.

Die erste Gruppe betrachtet Prozeßausgangsgrößen, wie Laufunruhe, Geräusch, Vibrationen oder das Lambda-Sonden-Signal. Es wird also die Reaktion der Brennkraftmaschine auf den Verbrennungsvorgang ausgewertet

Diese Verfahren sind sehr kostengünstig, da die dazu notwendigen Sensoren meist bereits in Motorsteuerungssystemen vorhanden sind. Die entsprechende Diagnose erfordert daher lediglich zusätzliche SoftwareRoutinen. Problematisch ist allerding die große Last- und Drehzahlabhängigkeit mancher dieserVerfahren, wobei z. B. durch Schwingungs- und Resonanzeinflüsse in bestimmten Betriebsbereichen eine sichere Aussage schwierig wird.

Die zweite Gruppe von Diagnoseverfahren betrachtet Prozeßeingangsgrößen, wie z. B. den Zündstrom oder die Ausgangssignale der Endstufen für die Einspritzventile. Es wird also jeweils eine der Voraussetzungen für eine ordnungsgemäße Verbrennung ausgewertet

Diese Verfahren sind ebenfalls sehr kostengünstig, da nur die entsprechenden elektrischen Signale ausgewertet werden müssen. Bei diesen Verfahren ist problematisch, daß bei einer negativen Diagnose zwar ein Verbrennungsaussetzer sicher erkannt wird, da bei fehlendem Zündstrom oder fehlenden Ausgangssignalen für die Einspritzventi le keine Verbrennung stattfinden kann. Im positiven Diagnosefall istjedoch keine Aussage möglich, da trotz vorhandenem Zündstrom oder vorhandenen Ausgangssignalen durch andere Einflußfaktoren ein Verbrennungsaussetzer auftreten kann.

Die dritte Gruppe betrachtet schließlich den Prozeß selbst, wie z. B. Ionenstrom, Druck- oder Lichtmessungen im Brennraum. Dabei wird also direkt der Ablauf des Verbrennungsprozeßes betrachtet.

Diese Verfahren sind kostenintensiv, da jeweils ein entsprechender Sensor in den Brennraum eingebaut werden muß. Der Vorteil dieser Verfahren ist, daß sie eine allgemeingültige Aussage über den Verbrennungsprozeß liefern.

Die erfindungsgemäße Lösung sieht nun vor, ein Diagnoseverfahren aus den beiden ersten Gruppen zu verwenden, die besonders kostengünstig auszuführen sind. Um dem Nachteil der Last- und Drehzahlabhängigkeit und der fehlenden Allgemeingültigkeit für den positiven Diagnosefall zu vermeiden, wird last- und drehzahlabhängig ein Diagnoseverfahren aus mehreren vorhandenen ausgewählt.

Dazu sind in einem Kennfeld last- und drehzahlabhängig Kennzahlen abgelegt. Eine Auswahleinrichtung wählt abhängig von der ausgelesenen Kennzahl das Diagnoseverfahren aus. Dabei sind alle Kombinationen möglich. In einem bestimmten Betriebsbereich kann z.B. ein Diagnoseverfahren, wie das über die Laufunruhe, genügen. In einem anderen Betriebsbereich können dagegen zwei oder mehrere Diagnoseverfahren gleichzeitig eingesetzt werden.

Auch für die Erkennung des Verbrennungsaussetzers sind beliebige Kombinationen möglich. Ein Verbrennungsaussetzer kann z. B. erkannt werden, wenn nur ein einziges oder ein Diagnoseverfahren aus mehreren einen Verbrennungsaussetzer detektieren. Es ist auch möglich einen Verbrennungsaussetzer nur dann zu erkennen, wenn mehrere oder alle eingesetzten Diagnoseverfahren diesen Fall detektieren.

Die Auswahl einer bestimmten Kombination wird durch Prüfstands- oder Fahrversuche ermittelt. Mit Hilfe der in dem Kennfeld abgespeicherten Kennzahlen können dabei in verschiedenen Last- und Drehzahlbereichen auch verschiedene Kombinationen eingesetzt werden.

Die Erfindung wird anhand der Figuren näher erläutert. Dabei zeigen
- Figur 1: ein Flußdiagramm zur Darstellung der Arbeitsweise einer erfindungsgemäßen Diagnoseeinrichtung und
- Figur 2: ein Kennfeld mit Kennzahlen gemäß der Erfindung.

Die Diagnoseeinrichtung kommt zum Einsatz im Rahmen eines Motorsteuerungssystems mit einem Microcomputer. Die Diagnoseeinrichtung ist Teil des Microcomputersystems, wobei die wesentlichen Funktionsteile ein Speicher mit einem darin abgespeicherten Kennfeld sind sowie ein weiterer Speicher, in dem entsprechende Diagnoseprogrammroutinen abgelegt sind.

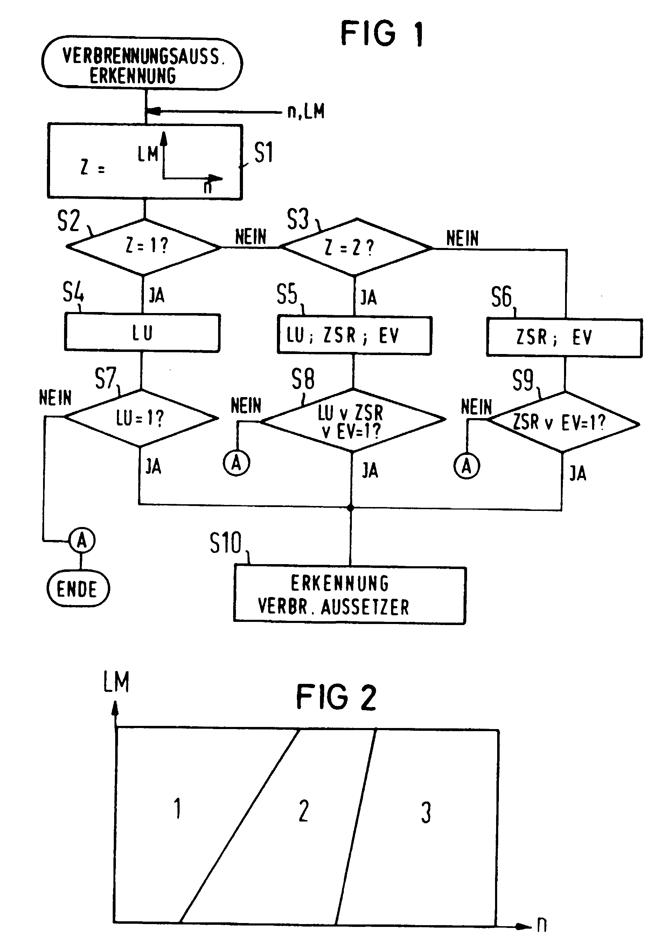

Das in Figur 1 dargestellte Flußdiagramm der Verbrennungsaussetzererkennung wird von der Motorsteuerung zyklisch aufgerufen. Die Werte für die Drehzahl n und die angesaugte Luftmasse LM werden aus anderen Programmroutinen der Motorsteuerung übernommen. Solche Programmroutinen sind z. B. die für die laufende Einspritzzeit und Zündzeitpunktberechnung, die jeweils mit den aktuellen Last- und Drehzahlwerten arbeiten.

Im Schritt S1 wird abhängig von der Drehzahl n und der angesaugten Luftmasse LM eine Kennzahl Z ermittelt. Diese Kennzahl Z ist in einem Kennfeld abgelegt, das in Figur 2 näher dargestellt ist

Im Beispiel sind dann drei Kennzahlen Z enthalten, die jeweils einen Kennfeldbereich repräsentieren. Diese Kennfeldbereiche sind am Motorprüfstand festgelegt und unterscheiden sich dadurch, daß in jedem Bereich eine andere Kombination von Diagnoseverfahren zum Detektieren von Verbrennungsaussetzern die besten Resultate bezüglich Auswertesicherheit liefert. Das dargestellte Beispiel gilt für einen bestimmten 6-Zylinder-Motor. Bei anderen Motoren können andere Kombinationen oder auch mehr oder weniger Kennfeldbereiche geeigneter sein.

In den Schritten S2 und S3 werden dann je nach Kennzahl Z die verschiedenen Diagnoseverfahren zur Detektion von Verbrennungsaussetzern aufgerufen.

Im Kennfeldbereich mit der Kennzahl 1 ist dies ein Diagnoseverfahren über die Laufunruhe. Dabei wird die Drehzahl für jeden Zylinder an zwei Kurbelwellenstellungen ausgewertet und ein Verbrennungsaussetzer detektiert, wenn die Steigung des Drehzahlverlaufs einen Grenzwert unterschreitet Ein solches Verfahren ist in der Europäischen Patentanmeldung 90123131.6 der Anmelderin beschrieben.

Im Schritt S7 wird abgefragt, ob über das Verfahren ein Verbrennungsaussetzer detektiert wurde. Wenn ja, folgt der Schritt S10, bei dem die Diagnoseeinrichtung einen Verbrennungsaussetzer erkennt. Wenn nein, wird die Programmroutine beendet.

Wenn im Schritt S3 der Kennfeldbereich mit der Kennzahl 2 erkannt wird, werden im Schritt S5 mehrere Diagnoseverfahren aktiviert Dies sind das Verfahren über die Laufunruhe, über den Zündstrom und über die Ausgangssignale der Endstufen für die Einspritzventile. Beim Diagnoseverfahren über den Zündstrom wird geprüft, ob im Primär- oder auch im Sekundärkreis der Zündung ein entsprechender Zündstrom fließt. Beim Diagnoseverfahren über die Einspritzventile werden die Ausgangssignale der den Einspritzventilen zugeordneten Endstufen überprüft

Im Schritt S8 wird ein Verbrennungsaussetzer detektiert, wenn das Diagnoseverfahren über die Laufunruhe oder über den Zündstrom oder über die Ausgangssignale der Endstufen für die Einspritzventile ansprechen. Der Grund für diese Maßnahme ist, daß in diesem durch die Kennzahl 2 gekennzeichneten Kennfeldbereich das Diagnoseverfahren über die Laufunruhe insbesondere durch Schwingungseinflüsse in seiner Aussage unsicher ist. Daher wird ein Verbrennungsaussetzer im Schritt S10 zusätzlich dann erkannt, wenn die Diagnoseverfahren über den Zündstrom oder über die Ausgangssignale der Endstufen für die Einspritzventile angesprochen haben.

Wenn die Antwort beim Schritt S3 nein ist, muß die Kennzahl 3 vorliegen. Dann werden im Schritt 56 die Diagnoseverfahren über den Zündstrom und über die Ausgangssignale der Endstufen für die Einspritzventile aktiviert. Dabei wird über eine Ja-Antwort im Schritt S9 ein Verbrennungsaussetzer im Schritt S10 dann erkannt, wenn eines der beiden Diagnoseverfahren anspricht. In diesem Kennfeldbereich bietet das Diagnoseverfahren über die Laufunruhe praktisch keine verwertbare Aussage mehr und wird daher weggelassen.

### Bezugszeichenliste/Spezialbegriffe

| | |
|---|---|
| | Kennfeld |
| Z | Kennzahl |
| | Kennfeldbereich |
| LM | Luftmasse |
| n | Drehzahl |
| LU | Diagnoseverfahren über Laufunruhe |
| ZSR | Diagnoseverfahren über Zündstrom |
| EV | Diagnoseverfahren über Ausgangssignale der Endstufen für die Einspritzventile |

## Patentansprüche

1. Diagnoseeinrichtung zur Erkennung von Verbrennungsaussetzern in einer Brennkraftmaschine
**dadurch gekennzeichnet**, daß
ein Speicher mit einem Kennfeld vorgesehen ist, in dem last- und drehzahlabhängig Kennzahlen (Z) abgelegt sind, die jeweils einen Kennfeldbereich repräsentieren, daß eine Auswahleinrichtung abhängig von der ausgelesenen Kennzahl (Z) mindestens ein Diagnoseverfahren aus mindestens zwei Diagnoseverfahren zur Detektion von Verbrennungsaussetzern auswählt und daß die Diagnoseeinrichtung einen Verbrennungsaussetzer erkennt, wenn mindestens eines der Diagnoseverfahren einen Verbrennungsaussetzer detektiert.

2. Diagnoseeinrichtung nach Anspruch 1
**dadurch gekennzeichnet,** daß
die Auswahleinrichtung das Diagnoseverfahren aus einer Gruppe von Diagnoseverfahren auswählt, die Prozeßausgangsgrößen des Verbrennungsprozeßes auswerten, wie Laufunruhe, Geräusch, Vibrationen, Lambdasondensignal.

3. Diagnoseeinrichtung nach Anspruch 1
**dadurch gekennzeichnet, daß**
die Auswahleinrichtung das Diagnoseverfahren aus einer Gruppe von Diagnoseverfahren auswählt, die Prozeßeingangsgrößen des Verbrennungsprozeßes auswerten, wie Zündstrom oder Ausgangssignale der Endstufen für die Einspritzventile.

4. Diagnoseeinrichtung nach Anspruch 2 und 3,
**dadurch gekennzeichnet,**
daß die Auswahleinrichtung zwei Diagnoseverfahren auswählt und daß sie einen Verbrennungsaussetzer erkennt, wenn beide Diagnoseverfahren einen Verbrennungsaussetzer detektierten.

5. Diagnoseeinrichtung nach Anspruch 2 und 3,
**dadurch gekennzeichnet,**
daß die Diagnoseeinrichtung einen Verbrennungsaussetzer erkennt, wenn bei mehreren ausgewählten Diagnoseverfahren eine bestimmte Kombination dieser Diagnoseverfahren jeweils einzeln einen Verbrennungsaussetzer detektiert.

6. Diagnoseeinrichtung nach Anspruch 2 und 3
**dadurch gekennzeichnet,**
daß in dem Kennfeld drei Kennzahlen abgelegt sind, daß die Auswahleinrichtung bei der ersten Kennzahl das Diagnoseverfahren über die Laufunruhe, bei der zweiten Kennzahl das Diagnoseverfahren über die Laufunruhe, über den Zündstrom sowie über die Steuersignale für die Einspritzventile und bei der dritten Kennzahl das Diagnoseverfahren über den Zündstrom und über die Steuersignale für die Einspritzventile auswählt.

## Claims

1. Diagnostic device for recognizing combustion misfires in an internal-combustion engine, characterized in that a memory with a family of characteristics, in which characteristic numbers (Z) which are dependent on load and on rotational speed and in each case represent a family of characteristics range are filed, is provided, in that a selection device selects at least one diagnostic process from at least two diagnostic processes for detecting combustion misfires in dependence on the read-out characteristic number (Z), and in that the diagnostic device recognizes a combustion misfire when at least one of the diagnostic processes detects a combustion misfire.

2. Diagnostic device according to Claim 1, characterized in that the selection device selects the diagnostic process from a group of diagnostic processes which evaluate process output quantities of the combustion process, such as unsteady running, noise, vibrations, lambda-probe signal.

3. Diagnostic device according to Claim 1, characterized in that the selection device selects the diagnostic process from a group of diagnostic processes which evaluate the process input quantities of the combustion process, such as ignition current or output signals from the output stages for the injection valves.

4. Diagnostic device according to Claims 2 and 3, characterized in that the selection device selects two diagnostic processes, and in that it recognizes a combustion misfire when both diagnostic processes detect a combustion misfire.

5. Diagnostic device according to Claims 2 and 3, characterized in that the diagnostic device recognizes a combustion misfire when, in a plurality of selected diagnostic processes, a specific combination of these diagnostic processes respectively individually detects a combustion misfire.

6. Diagnostic device according to Claims 2 and 3, characterized in that three characteristic numbers are filed in the family of characteristics, in that the selection device selects the diagnostic process relating to unsteady running in the case of the first characteristic number, the diagnostic process relating to unsteady running, to the ignition current and to the control signals for the injection valves in the case of the second characteristic number and the diagnostic process relating to the ignition current and to the control signals for the injection valves in the case of the third characteristic number.

## Revendications

1. Dispositif de diagnostic pour identifier des ratés de combustion dans un moteur à combustion interne,
caractérisé par le fait
qu'il est prévu une mémoire contenant un champ de courbes caractéristiques et dans laquelle il est mémorisé, en fonction de la charge et de la vitesse de rotation, des nombres caractéristiques (Z), qui représentent respectivement un domaine de champ de courbes caractéristiques, en ce qu'un dispositif de sélection sélectionne, en fonction du nombre caractéristique (Z), au moins un procédé de diagnostic parmi au moins deux procédés de diagnostic pour la détection d'un raté de combustion, et que le dispositif de diagnostic identifie un raté de combustion lorsqu'au moins l'un des procédés de diagnotic détecte un raté de combustion.

2. Dispositif de diagnostic suivant la revendication 1, caractérisé par le fait que le dispositif de sélection sélectionne le procédé de diagnostic à partir d'un groupe de procédés de diagnostic, qui évaluent des grandeurs de sortie du processus de combustion, comme une instabilité de marche, un bruit, des vibrations, un signal de la sonde lambda.

3. Dispositif de diagnostic suivant la revendication 1, caractérisé par le fait que le dispositif de sélection sélectionne le procédé de diagnostic à partir d'un groupe de procédés de diagnostic, qui évaluent des grandeurs d'entrée du processus de combustion, comme le courant d'allumage ou des signaux de sortie des étages finals pour les soupapes d'injection.

4. Dispositif de diagnostic suivant les revendications 2 et 3, caractérisé par le fait que le dispositif de sélection sélectionne deux procédés de diagnostic et qu'il identifie un raté de combustion lorsque les deux procédés de diagnostic détectent un raté de combustion.

5. Dispositif de diagnostic suivant les revendications 2 et 3, caractérisé par le fait que le dispositif de diagnostic identifie un raté de combustion lorsque, dans le cas de plusieurs procédés de diagnostic sélectionnés, une combinaison déterminée de ces procédés de diagnostic détecte individuellement un raté de combustion.

6. Dispositif de diagnostic suivant les revendications 2 et 3, caractérisé par le fait que trois nombres caractéristiques sont mémorisés dans l'ensemble de courbes caractéristiques, et que le dispositif de sélection sélectionne, pour le premier nombre caractéristique, le procédé de diagnostic concernant l'instabilité de marche, pour le second nombre caractéristique le procédé de diagnostic concernant l'instabilité de marche, le courant d'allumage ainsi que les signaux de commande pour les soupapes d'injection, et pour le troisième nombre caractéristique, le procédé de diagnostic concernant le courant d'allumage et les signaux de commande pour les soupapes d'injection.
